# EUROPEAN PATENT SPECIFICATION

(11) **EP 2 520 591 B1**
(45) Date of publication and mention of the grant of the patent: **01.04.2015**
(21) Application number: 10841236.2
(22) Date of filing: 28.12.2010
(51) Int. Cl.: C08F 4/654, C08F 10/00

(54) **CATALYST FOR POLYOLEFIN POLYMERISATION AND A PRODUCTION METHOD FOR THE SAME**
KATALYSATOR FÜR POLYOLEFINPOLYMERISATION UND HERSTELLUNGSVERFAHREN DAFÜR
CATALYSEUR DE POLYMÉRISATION POLYOLÉFINIQUE ET SON PROCÉDÉ DE PRODUCTION

(30) Priority: 28.12.2009 KR 20090132229
(43) Date of publication of application: 07.11.2012
(73) Proprietor: Honam Petrochemical Corporation, Seoul 156-711 (KR)
(72) Inventor: CHOI, Young Heon, Daejeon 305-720 (KR); LIM, Seong Soo, Daejeon 305-720 (KR); KIM, Young Kook, Daejeon 305-720 (KR)
(74) Representative: Eisenführ Speiser
(86) International application number: PCT/KR2010/009418
(87) International publication number: WO 2011/081404

(56) References cited:
- EP-A1- 0 926 165
- EP-A2- 2 301 664
- WO-A1-2005/040231
- KR-A- 20010 033 585
- KR-A- 20100 007 076
- US-B1- 6 693 058

## Description

### CROSS-REFERENCE TO RELATED APPLICATIONS

This application is based on and claims priority from Korean Patent Application No. 10-2009-0132229, filed on 12 28. 2009, with the Korean Intellectual Property Office, the present disclosure of which is incorporated herein in its entirety by reference.

### TECHNICAL FIELD

The present disclosure relates to a method for preparing a catalyst used to polymerize polyolefin, and particularly to a method for preparing a Ziegler-Natta type catalyst for polymerization of polyolefin.

### BACKGROUND

Catalysts for polymerization of polyolefin in the related art may be classified into Ziegler-Natta type catalysts, chromium-based catalysts and metallocene catalysts according to the kind of central metal. These catalysts are different from each other in catalyst activity, molecular weight distribution characteristics of a polymer and reaction characteristics for comonomers and thus are selectively used according to each preparation process and applied product.

In this case, among the catalysts, Ziegler-Natta type catalysts are most commonly used and most of the catalysts are used as magnesium chloride-supported types. These magnesium chloride-supported Ziegler-Natta type catalysts are generally composed of solid catalyst components including magnesium, titanium, halogen and an electron-donating organic compound and applied to various commercial processes such as slurry polymerization, bulk polymerization, gas phase polymerization and the like. Thus, not only basic physical properties such as high activity and stereo regularity, but also appropriate shape and size of particles, uniform particle size distribution, high bulk density of a polymeric product to be prepared and the like need to be satisfied.

In order to prepare a support for a Ziegler-Natta type catalyst which satisfies these conditions, a recrystallization and reprecipitation method, a spray drying method, a method using chemical reactions and the like have been used until now. Among them, the recrystallization and reprecipitation method and the spray drying method are the most commonly used, but catalysts using supports made by these methods have relatively low activity, and thus catalyst residues are present in quite large amounts in polymeric products (polyolefin). Thus, there is a limitation in that the catalysts are not somewhat suitable to develop a currently emerging future-oriented eco-friendly material.

The catalyst prepared by using, as a support, dialkoxy magnesium obtained by reacting magnesium with alcohol as one of the methods using chemical reactions is advantageous in that the catalyst has high activity and stereo regularity. However, the catalyst is disadvantageous in that the polymeric product has a somewhat smaller bulk density than the magnesium chloride supported catalyst in the related art and thus the process stability and productivity are deteriorated.

In this regard, US Pat. No. 4,816,433 suggests a method for preparing a solid catalyst for polymerization of olefin by using a dialkoxy magnesium single support and reacting the single support with titanium tetrachloride and an internal electron donor. However, this technology is disadvantageous in that the polymerization product has a low bulk density of 0.45 g/ml or less, and thus the production weight per reactor of a unit volume is low in commercial processes, leading to decrease in productivity.

US Pat. No. 5,028,671 suggests a method for preparing a spherical solid catalyst for polymerization of olefin, obtained by reacting a spherical magnesium halide support which includes alcohol and is prepared by a spray drying method, titanium tetrachloride and an internal electron donor. However, this technology is also disadvantageous in that when polypropylene is polymerized, the activity is 30 kg-PP/g-cat or less and catalyst residues of relatively large amounts are left in polymerization products, and thus the catalyst is not suitable as a future eco-friendly material.

### SUMMARY

The present disclosure has been made in an effort to provide a method for preparing a catalyst for polymerization of polyolefin, which may exhibit high activity and a catalyst for polymerization of polyolefin prepared by the same.

The present disclosure has also been made in an effort to provide a method for preparing polyolefin having high bulk density by using the catalyst for polymerization of polyolefin.

An exemplary embodiment of the present disclosure provides a method for preparing a catalyst for polymerization of polyolefin, including: a) dissolving magnesium halide in a first alcohol and a first hydrocarbon to prepare a magnesium halide precursor solution; b) reacting a halogen compound and a second alcohol with metal magnesium to prepare a dialkoxy magnesium support; and c) reacting the magnesium halide precursor solution and the dialkoxy magnesium support with titanium tetrachloride and an internal electron donor in the presence of a second hydrocarbon.

That is, the present disclosure prepares a catalyst for polymerization of polyolefin by using dialkoxy magnesium particles obtained by reacting a mixed precursor solution of a first alcohol and a first hydrocarbon, in which magnesium halide is dissolved, with metal magnesium and a second alcohol in the presence of a halogen compound which is a reaction initiator to prepare a two-component support in which the precursor solution and the dialkoxy magnesium particles are included and reacting titanium tetrachloride and an internal electron donor with the two-component support.

Here, step c) may include firstly reacting the magnesium halide precursor solution and the dialkoxy magnesium support with titanium tetrachloride in the presence of the second hydrocarbon to obtain a solid product; and secondly reacting the solid product with titanium tetrachloride and an internal electron donor in the presence of the second hydrocarbon. In this case, the solid product is a two-component support, obtained by subjecting magnesium halide to a recrystallization reaction (precipitation) on the surface of a dialkoxy magnesium support, and a support in which two components of dialkoxy magnesium-magnesium halide are combined.

Meanwhile, the present disclosure may provide a catalyst for polymerization of polyolefin prepared by the above-described preparation method and including magnesium, titanium, an internal electron donor and a halogen atom.

The present disclosure may provide a method for preparing polyolefin by using a catalyst for polymerization of polyolefin prepared by the above-described preparation method.

### DETAILED DESCRIPTION

Hereinafter, the above-described present disclosure will be described in more detail.

### <Preparation method of catalyst for polymerization of polyolefin and catalyst prepared by the same>

### 1. Preparation of magnesium halide precursor solution

A magnesium halide precursor solution according to the present disclosure may be obtained by a method of introducing a first alcohol and a predetermined amount of a first hydrocarbon into magnesium halide, and then stirring the mixture at a high temperature to achieve a homogeneous dissolution.

In this case, an available magnesium halide is not particularly limited, but is a compound which does not have reducibility, and may be selected from the group consisting of magnesium chloride, magnesium fluoride, magnesium bromide, magnesium iodide, phenoxy magnesium chloride, isoproxy magnesium chloride and butoxy magnesium chloride. Among them, magnesium chloride which is structurally and coordinatively stable with titanium tetrachloride which is a main active metal is preferably used. A catalyst using the magnesium chloride is readily used to prepare a polymer (polyolefin) having high bulk density.

Available first alcohol is not particularly limited, but may be one or two or more selected from the group consisting of aliphatic alcohols, such as methanol, ethanol, n-propanol, isopropanol, n-butanol, isobutanol, n-pentanol, isopentanol, neopentanol, cyclopentanol, n-hexanol, n-heptanol, n-octanol, decanol, dodecanol, 2-methylpentanol, 2-ethylbutanol, 2-ethylhexanol and the like; aliphatic alcohols represented by the formula R₁OH (in this case, R₁ is an aliphatic hydrocarbon having from 1 to 12 carbon atoms (specifically, an alkyl group)), such as cyclohexanol, methylcyclohexanol and the like; and aromatic alcohols represented by the formula R₂OH (in this case, R₂ is an aromatic hydrocarbon having from 6 to 12 carbon atoms), such as benzyl alcohol, methylbenzyl alcohol, isopropyl benzyl alcohol, α-methylbenzyl alcohol and the like.

In this case, one or two or more first alcohols selected from the aliphatic alcohols are preferably used either alone or in combination thereof, and among the aliphatic alcohols, 2-ethylhexanol is suitably used. Here, when two or more first alcohols are mixed, the mixture ratio is not particularly limited, but it is preferred that the first alcohol totally used is used in an amount of from 1 to 6 moles and specifically from 2 to 4 moles based on 1 mole of magnesium halide.

Meanwhile, in reacting magnesium halide with the first alcohol in the presence of the first hydrocarbon to prepare a homogeneous precursor solution, available first hydrocarbon is not particularly limited, but an aliphatic hydrocarbon having from 6 to 20 carbon atoms is preferred. Here, non-limiting examples of the aliphatic hydrocarbon having from 6 to 20 carbon atoms include hexane, heptane, octane, decane, dodecane, tetradecane, mineral oil, cyclohexane, cyclooctane, methylcyclopentane, methylcyclohexane and the like.

In this case, it is preferred that the one or two or more first hydrocarbons selected from the aliphatic hydrocarbons are used either alone or in combination thereof. When two or more first hydrocarbons are selected from the aliphatic hydrocarbons and mixed, the mixture ratio thereof is not particularly limited. Meanwhile, the carbon number of the aliphatic hydrocarbon is preferably from 6 to 20, and among them, the carbon number is suitably from 8 to 15. When the carbon number of the aliphatic hydrocarbon is less than the range, the boiling point of the first hydrocarbon solvent is low, which limits the reaction temperature. When the carbon number is more than the range, the viscosity and melting point of the first hydrocarbon solvent are so high that it is difficult to use the first hydrocarbon solvent.

In preparing the magnesium halide precursor solution, the magnesium halide, the first alcohol and the first hydrocarbon are preferably used in amounts of from 1 to 10 parts by weight and from 1 to 20 parts by weight, respectively, based on 1 part by weight of magnesium halide. When the first alcohol is used in an amount less than the range, magnesium halide is not dissolved well. When the first alcohol is used in an amount more than the range, the recrystallization reaction may not occur well during synthesis of the catalyst. When the first hydrocarbon is used in an amount less than the range, magnesium halide dissolved in the first alcohol is not dispersed well, and thus the two-component support is not formed during synthesis of the catalyst, but a magnesium halide single support is formed. When the first hydrocarbon is used in an amount more than the range, the volume of the magnesium halide precursor solution may be increased, thereby affecting the concentrations of all reactants during synthesis of the catalyst.

Magnesium halide is reacted with the first alcohol at a reaction temperature (dissolution temperature) of preferably from 70°C to 150°C in the presence of the first hydrocarbon, and specifically, the temperature is suitable at 100°C or more. It is preferred that the upper limit of the reaction temperature is not higher than the boiling points of the first hydrocarbon and the first alcohol. In order to disperse the precursor solution prepared, it is preferred that a stirrer is installed in a reactor to ensure sufficient stirring.

### 2. Preparation of dialkoxy magnesium support

A dialkoxy magnesium support according to the present disclosure may be obtained in the form of particles by reacting metal magnesium with a second alcohol in the presence of a halogen compound which is a reaction initiator.

Here, the metal magnesium is preferably in the form of particles, and the size thereof is from 10 to 1,000 µm and specifically, a powder phase having a size of from 30 to 500 µm is suitable.

As the halogen compound which is the reaction initiator may be used a halogen molecule, an alkyl halide compound, an acyl halide compound or a metal halide compound. Non-limiting examples thereof include magnesium chloride, magnesium dichloride, magnesium fluoride, magnesium bromide, magnesium iodide, phenoxy magnesium chloride, isoproxy magnesium chloride or butoxy magnesium chloride. It is suitable that the halogen compound is in an amount of from 0.01 to 10 parts by weight and specifically from 0.1 to 5 parts by weight, based on 1 part by weight of metal magnesium. When the halogen compound is used in an amount less than the range, the reaction rate is decreased. When the halogen compound is used in an amount more than the range, the particle size of the product may be too increased or fine particles may be produced in a large amount.

Available second alcohol is not particularly limited, but may be one or two or more selected from the group consisting of aliphatic alcohols represented by the formula R₃OH (in this case, R₃ is an aliphatic hydrocarbon having from 1 to 6 carbon atoms (specifically, an alkyl group)), such as methanol, ethanol, n-propanol, isopropanol, n-butanol, isobutanol, n-pentanol, isopentanol, neopentanol, cyclopentanol, n-hexanol, cyclohexanol and the like; and aromatic alcohols represented by the formula R₄OH (in this case, R₄ is an aromatic hydrocarbon having 6 carbon atoms), such as phenol and the like and used either alone or in combination thereof. In this case, among the aliphatic alcohols, one or two or more selected from methanol, ethanol, propanol or butanol are preferably used either alone or in combination thereof. Among them, ethanol is most preferably used. Here, when two or more second alcohols are selected and mixed, the mixture ratio thereof is not particularly limited.

It is suitable that the second alcohol is used in an amount of from 5 to 50 parts by weight and specifically from 7 to 20 parts by weight based on 1 part by weight of the metal magnesium. When the second alcohol is used in an amount of less than 5 parts by weight, the viscosity of the slurry (that is, a mixture of the second alcohol in the liquid phase, dialkoxy magnesium in the solid phase and unreacted metal magnesium) is abruptly increased, then it is difficult to uniform stir of the slurry. When the second alcohol is used in an amount of more than 50 parts by weight, the bulk density of the support produced may be abruptly decreased or the surface of the support particles may become rough. Specifically, when the bulk density of the support is decreased, the bulk density of the catalyst is decreased. Accordingly, the bulk density of the polymer (polyolefin) finally prepared may also be decreased, and when the surface of the support particles becomes rough, the process stability may be deteriorated during polymerization.

When the dialkoxy magnesium support according to the present disclosure is prepared, the reaction temperature is preferably from 25 to 110°C, and specifically, suitable from 45 to 90°C. When the reaction temperature is less than 25°C, the reaction becomes too slow. When the temperature is more than 110°C, the reaction is so rapid that the production of fine particles may be increased.

### 3. Preparation of catalyst for polymerization of polyolefin by reacting magnesium halide precursor solution with dialkoxy magnesium support

The catalyst for polymerization of polyolefin according to the present disclosure may be prepared by reacting the magnesium halide precursor solution and the alkoxy magnesium support in the form of particles (spherical), as prepared above, with titanium tetrachloride and an internal electron donor in the presence of the second hydrocarbon.

It is also possible to prepare firstly reacting the magnesium halide precursor solution and the dialkoxy magnesium support in the form of particles (spherical), as prepared above, with titanium tetrachloride in the presence of the second hydrocarbon to prepare a solid product (two-component support), and then secondly reacting the solid product with titanium tetrachloride and an internal electron donor again in the presence of the second hydrocarbon.

In this case, available second hydrocarbon is not particularly limited, but one or two or more hydrocarbons selected from the group consisting of aliphatic hydrocarbons having from 6 to 12 carbon atoms and aromatic hydrocarbons having from 6 to 12 carbon atoms may be used either alone or in combination thereof. Specifically, it is preferred that one or two or more are selected from saturated aliphatic hydrocarbons having from 7 to 10 carbon atoms or aromatic hydrocarbons having from 6 to 12 carbon atoms and used either alone or in combination thereof. Here, non-limiting examples of the aliphatic hydrocarbon having from 6 to 12 carbon atoms include hexane, heptane, octane, decane, dodecane, tetradecane, mineral oil and the like, and non-limiting examples of the aromatic hydrocarbon having from 6 to 12 carbon atoms include benzene, toluene, xylene, ethyl benzene, cumene and the like.

Meanwhile, an available material as the internal electron donor is not particularly limited, but one or two or more are preferably selected from the group consisting of phthalate-based compounds, carboxylic acid ester compounds and diether compounds.

Non-limiting examples of the phthalate-based compounds include monoethoxyphthalate, dimethyl phthalate, methylethyl phthalate, diethyl phthalate, di-normal propyl phthalate, diisopropyl phthalate, di-normal butyl phthalate, diisobutyl phthalate, di-normal octyl phthalate, dipentyl phthalate or mixtures thereof. Non-limiting examples of the carboxylic acid ester compounds include methyl acetate, ethyl acetate, phenyl acetate, ethyl propanate, ethyl butyrate, diethyl malonate or mixtures thereof. Non-limiting examples of the diether compounds include 1,3-diether type, such as 2,2-dimethyl-1,3-dimethoxypropane, 2,2-diisopropyl-1,3-dimethoxypropane, 2,2-diisobutyl-1,3-dimethoxypropane, 2,2-diisobutyl-1,3-diethoxypropane, 2,2-diisobutyl-1,3-dibutoxypropane or mixtures thereof.

In the present disclosure, it is preferred that the magnesium halide precursor solution and the titanium tetrachloride compound are first introduced into a suspended solution in which the dialkoxy magnesium support is suspended in the second hydrocarbon solvent to cause a first reaction, and at this time, it is suitable that the reaction temperature is from -50 to 50°C and specifically from -30 to 20°C. When the reaction temperature is out of the range, the particle shape of a catalyst which is a final product is destroyed and thus fine particles may be produced in large amounts. When a catalyst having the fine particles of large amounts is used in this manner, process stability may be deteriorated during the commercial production thereof.

Here, it is preferred that the amount of magnesium halide included in the magnesium halide precursor solution is from 0.01 to 10 parts by weight and specifically 0.05 to 0.5 part by weight, based on 1 part by weight of the dialkoxy magnesium support. When the amount of magnesium halide is less than the range, a component of magnesium halide in the two-component support is decreased, and thus the effect of improving the bulk density of the polymer (polyolefin) may be deteriorated. When the amount is more than the range, not only the two-component support but also the magnesium halide single support may be formed.

It is preferred that the amount of titanium tetrachloride used during a first reaction is from 0.1 to 10 parts by weight and specifically from 3 to 8 parts by weight based on 1 part by weight of the dialkoxy magnesium support.

Meanwhile, it is preferred that the injection of the magnesium halide precursor solution and titanium tetrachloride is slowly performed over from 30 min to 5 hr, and the reaction of producing the two-component support may be completed by slowly increasing the temperature up to from 60 to 100°C after the injection is completed.

The reaction of producing the support is completed in this manner, and then a mixture in the slurry state, in which the support is included, is washed with the second hydrocarbon once or more, and then titanium tetrachloride is introduced again therein and heated up to from 90 to 130°C to perform a second reaction. In this case, the amount of titanium tetrachloride used is preferably from 0.1 to 10 parts by weight and more preferably from 2 to 7 parts by weight, based on 1 part by weight of the dialkoxy magnesium support initially used.

An internal electron donor is introduced during the process of heating of the second reaction, and the introduction temperature and the number of times of introduction at this time are not particularly limited. The whole amount of the internal electron donor used is preferably from 0.1 to 1 part by weight based on 1 part by weight of the dialkoxy magnesium support used. When the internal electron donor is used such that the amount is out of the range, the polymerization activity of the catalyst or the stereo regularity when polyolefin is prepared by using the catalyst prepared may be deteriorated.

Here, the process of performing the reaction may be further added by washing the mixture in the slurry state, in which the second reaction is also completed, with the second hydrocarbon once or more, then introducing titanium tetrachloride again therein and heating the mixture up to from 90 to 130°C. In this case, the amount of titanium tetrachloride used is preferably from 0.1 to 10 parts by weight and more preferably from 2 to 7 parts by weight, based on 1 part by weight of dialkoxy magnesium initially used. After the reaction, the mixture may be subjected to the washing process and the vacuum drying process by the second hydrocarbon to obtain the catalyst for polymerization of polyolefin, which is a product according to the present disclosure. It is possible to increase the activity of the catalyst by subjecting the mixture to a third reaction with titanium tetrachloride in this manner.

The catalyst for polymerization of polyolefin according to the present disclosure, which is prepared by the method as described above, includes magnesium, titanium, an internal electron donor and a halogen atom, and the content of each component may be controlled according to the content of the raw material and thus is not particularly limited. However, it is preferred that magnesium, titanium, the internal electron donor and the halogen atom are included in amounts of from 20 to 40 parts by weight, from 1 to 10 parts by weight, from 5 to 20 parts by weight and from 40 to 70 parts by weight, respectively.

### <Preparation method of polyolefin>

The present disclosure may prepare polyolefin by using the catalyst for polymerization of polyolefin prepared as described above. That is, the catalyst is prepared by the method as described above, and olefin may be polymerized (reacted) with a co-catalyst in the presence of the catalyst thus prepared to prepare polyolefin. Specifically, an alkyl aluminum compound as the co-catalyst and an external electron donor are placed into a polymerization reactor, the catalyst prepared as described above is added thereto, and hydrogen is supplied. Then, the polyolefin may be formed by introducing an olefin monomer therein to perform a polymerization reaction for a predetermined time. In this case, non-limiting examples of the material which is available as the alkyl aluminum compound include trimethyl aluminum, triethyl aluminum, triisobutyl aluminum, diethylaluminum chloride, ethylaluminum dichloride, ethylaluminum sesquichloride or the like, and non-limiting examples of the material which is available as the external electron donor include a silane compound such as cyclohexylmethyl dimethoxysilane, dicyclopentyl dimethoxysilane, diisopropyl dimethoxysilane, vinyltriethoxysilane and the like, or a mixture of the silane compounds.

Meanwhile, the catalyst of the present disclosure, which is used during the polymerization process of polyolefin, may be used in the gas-phase, bulk phase or slurry phase. When the polymerization is performed in the bulk phase or slurry phase, a separate solvent or olefin itself may be used as a medium, and olefin used in the polymerization may be used either alone or in combination of two or more kinds. Here, available solvent and olefin are not particularly limited, but butane, pentane, hexane, heptane, cyclopentane, cyclohexane and the like may be used as the solvent and ethylene, propylene, 1-butene, 1-pentene, 1-hexene, 1-octene and the like may be used as the olefin. It is suitable that the polymerization temperature of the polyolefin is from 0 to 200°C and preferably from 30 to 150°C, and that the polymerization pressure is from 1 to 100 atm and preferably from 2 to 40 atm.

Hereinafter, the present disclosure will be described in more detail with reference to Synthetic Examples and Polymerization Examples, but the scope of the disclosure is not limited to the following examples.

### [Example 1]

### 1. Preparation of magnesium halide precursor solution

A 350 ml-glass reactor equipped with a stirrer, an oil circulation heater and a cooling reflux device was sufficiently ventilated with nitrogen, and then 9.52 g of anhydrous magnesium chloride, 57.85 ml of 2-ethylhexanol and 50 ml of normal decane were introduced therein and melted while being stirred at 135°C and 300 rpm. When the anhydrous magnesium chloride is completely melted to obtain a homogeneous solution, the solution was aged for 1 hr and cooled to normal temperature to obtain a magnesium halide precursor solution.

### 2. Preparation of diethoxy magnesium support

A 2 L-glass reactor equipped with a stirrer, an oil circulation heater and a cooling reflux device was sufficiently ventilated with nitrogen, 36.5 g of metal magnesium, 3 ml of phthalic acid dichloride and 370 ml of anhydrous ethanol were introduced therein, and the temperature was increased to 80°C while the mixture were stirred at 400 rpm to allow the components to be reacted with each other. 370 ml of anhydrous ethanol was additionally introduced therein 30 min after the reaction begins, only hydrogen generated was discharged and ethanol was reacted while being refluxed. 180 ml of ethanol and 3 ml of phthalic acid dichloride were additionally introduced therein 2 hours after the generation of hydrogen is stabilized, and the reaction was performed while the temperature was maintained for a sufficient time. After the reaction, washing was performed eight times with 1 L of normal hexane per time at 50°C. The washed product was vacuum dried to obtain 160 g of a white powdered diethoxy magnesium support which has excellent fluidity. The diethoxy magnesium spherical support obtained had an average particle diameter of 45 µm and a bulk density of 0.33 g/ml.

### 3. Preparation of catalyst for polymerization of polyolefin supported in two-component support

A 2 L-glass reactor equipped with a stirrer, an oil circulation heater and a cooling reflux device was sufficiently ventilated with nitrogen, then 1,000 ml of toluene and 70 g of the diethoxy magnesium support prepared above were introduced therein, the reactor was maintained at a low temperature of 0°C or less, and 185 ml of titanium tetrachloride was introduced therein while the mixture was stirred at 500 rpm. When the introduction was completed, 111.2 ml of the magnesium halide precursor solution prepared above was introduced therein. After the introduction, the reactor was maintained for 1 hr, and the temperature of the reactor was slowly increased up to 90°C and reaction was performed for 2 hr. After the reaction, the solid product was allowed to be precipitated and was washed with 1,000 ml of fresh toluene five times.

1,000 ml of toluene was added to the solid product and 154.7 ml of titanium tetrachloride was introduced therein at normal temperature. After 30 min, the temperature was increased up to 70°C. After the temperature reached 70°C, 28.2 ml of diisobutyl phthalate was introduced therein, the temperature was increased up to 110°C at the same rate, and then the reaction was performed for 2 hr. After the reaction, the solid product was allowed to be precipitated and washed with 1,000 ml of fresh toluene five times, and then washed five times in the same manner by using 1,000 ml of normal hexane. The washed product was vacuum dried to obtain a catalyst, and at this time, the content of titanium was 3.5%.

### [Example 2]

In Example 2, the final solid product in Example 1 was washed with 1,000 ml of toluene four times, then 1,000 ml of fresh toluene and 154.7 ml of titanium tetrachloride were introduced therein, and an additional reaction was performed at 110°C for 2 hr. After the reaction, the solid product was allowed to be precipitated and washed with 1,000 ml of toluene five times, and then washed five times in the same manner by using 1,000 ml of normal hexane. The washed product was vacuum dried to obtain a catalyst, and at that time, the content of titanium was 3.0%.

### [Example 3]

A catalyst was obtained in the same manner as in Example 1, except that 55.75 ml of the magnesium halide precursor solution in Example 1 was introduced for 1 hr, and at that time, the content of titanium was 3.3%.

### [Comparative Example 1]

A catalyst was obtained in the same manner as in Example 1, except that the system is not subjected to introducing the magnesium halide precursor solution in Example 1, and at that time, the content of titanium was 2.8%.

### [Comparative Example 2]

### 1. Preparation of magnesium halide precursor solution

A 2 L-glass reactor equipped with a stirrer, an oil circulation heater and a cooling reflux device was sufficiently ventilated with nitrogen, then 47.6 g of anhydrous magnesium chloride, 275 ml of 2-ethylhexanol and 200 ml of normal decane were introduced therein and melted while being stirred at 135°C and 300 rpm. When the anhydrous magnesium chloride is completely melted to obtain a homogeneous solution, the solution was aged for 1 hr, then additionally aged for 1 hr by adding 10 ml of phthalic acid dichloride, and then cooled to normal temperature to obtain a magnesium halide precursor solution.

### 2. Preparation of catalyst for polymerization of polyolefin

A 2 L-glass reactor equipped with a stirrer, an oil circulation heater and a cooling reflux device was sufficiently ventilated with nitrogen, then 800 ml of normal decane was maintained at a low temperature of 0°C or less while being stirred at 500 rpm, and 438 ml of titanium tetrachloride was introduced therein. When the introduction was completed, 485 ml of the magnesium halide precursor solution prepared above was slowly introduced therein. After the introduction, the reactor was maintained for 1 hr, and then the temperature of the reactor was slowly increased up to 110°C, and reaction was performed for 2 hr. After the reaction, the solid product was allowed to be precipitated and washed with 1,000 ml of fresh toluene five times.

800 ml of normal decane was added to the solid product, and 219 ml of titanium tetrachloride was introduced therein at normal temperature. After 30 min, the temperature was increased up to 70°C. After the temperature reached 70°C, 20ml of diisobutyl phthalate was introduced therein, the temperature was increased up to 110°C at the same rate, and then the reaction was performed for 2 hr. After the reaction, the solid product was allowed to be precipitated and washed with 1,000 ml of fresh toluene five times, and then washed five times in the same manner by using 1,000 ml of normal hexane. The washed product was vacuum dried to obtain a catalyst, and the content of titanium was 2.7%.

### [Test Example] Preparation of polypropylene

A 2 L-high pressure stainless steel reactor was sufficiently ventilated with nitrogen, 2 mmol of triethyl aluminum and 0.15 mmol of cyclohexyl methyl dimethoxy silane were introduced therein, and each of 5 mg of the above-described catalysts prepared according to Examples 1 to 3 and Comparative Examples 1 and 2 was introduced. Subsequently, 1,000 ml of hydrogen and 500 g of the liquid phase propylene were introduced, a pre-polymerization was performed at 25°C for 5 min, and then polymerization was performed for 1 hr while the system was stirred at 70°C and 250 rpm.

Physical properties of the polypropylene obtained and the catalyst were analyzed in the following manner, and the result is shown in Table 1.
1) Catalyst activity (kg-PP/g-cat): amount of polymer produced (kg) / amount of catalyst (g)
2) Stereo regularity (XIS): Wt% of insoluble components which are crystallized in mixed xylene and precipitated
3) Bulk density (BD): value measured by ASTM D1895

**<Table 1>**

| | **Example 1** | **Example 2** | **Example 3** | **Comparative Example 1** | **Comparative Example 2** |
|---|---|---|---|---|---|
| Catalyst activity (kg-PP/g-cat, hr) | 36.7 | 45.8 | 42.2 | 35.9 | 22.6 |
| Bulk density (g/mL) | 0.48 | 0.49 | 0.46 | 0.42 | 0.42 |
| Stereo regularity (XIS) | 98.0 | 98.1 | 98.7 | 98.5 | 97.2 |

As shown in the above Table 1, it can be confirmed that all of Examples 1 to 3 according to the present disclosure have the values (representing 0.45 g/mL or more) in bulk density, which are higher than the values in Comparative Examples 1 and 2, and show wholly higher activities even in catalyst activity.

According to the present disclosure, a catalyst for polymerization of a two-component magnesium compound supported polyolefin, which has high activity, may be provided by including a preparation process of reacting a magnesium halide precursor solution obtained by dissolving magnesium halide in a first alcohol and a first hydrocarbon and a dialkoxy magnesium support obtained by reacting a halogen compound and a second alcohol with metal magnesium with titanium tetrachloride and an internal electron donor in the presence of the first hydrocarbon.

The present disclosure may provide polyolefin having high bulk density by using the above-described catalyst for polymerization of polyolefin to prepare the polyolefin.

## Claims

1. A method for preparing a catalyst for polymerization of a polyolefin, comprising:
a) dissolving magnesium halide in a first alcohol and a first hydrocarbon to prepare a magnesium halide precursor solution;
b) reacting a halogen compound and a second alcohol with metal magnesium to prepare a dialkoxy magnesium support; and
c) reacting the magnesium halide precursor solution and the dialkoxy magnesium support with titanium tetrachloride and an internal electron donor in the presence of a second hydrocarbon.

2. The method of claim 1, wherein the magnesium halide comprised in the magnesium halide precursor solution in step c) is comprised in a range of from 0.01 to 5 parts by weight based on 1 part by weight of the dialkoxy magnesium support.

3. The method of claim 1, wherein in step a), the first alcohol and the first hydrocarbon are used in amounts of from 1 to 10 parts by weight and from 1 to 20 parts by weight, respectively, based on 1 part by weight of the magnesium halide.

4. The method of claim 1, wherein the first alcohol used in step a) is selected from the group consisting of aliphatic alcohols represented by R₁OH and aromatic alcohols represented by R₂OH in which R₁ is an aliphatic hydrocarbon having from 1 to 12 carbon atoms and R₂ is an aromatic hydrocarbon having from 6 to 12 carbon atoms.

5. The method of claim 1, wherein the first hydrocarbon used in step a) is an aliphatic hydrocarbon having from 6 to 20 carbon atoms.

6. The method of claim 1, wherein in step b), the halogen compound and the second alcohol are used in amounts of from 0.01 to 10 parts by weight and from 5 to 50 parts by weight, respectively, based on 1 part by weight of the metal magnesium.

7. The method of claim 1, wherein the second alcohol used in step b) is selected from the group consisting of aliphatic alcohols represented by R₃OH and aromatic alcohols represented by R₄OH in which R₃ is an aliphatic hydrocarbon having from 1 to 6 carbon atoms and R₄ is an aromatic hydrocarbon having 6 carbon atoms.

8. The method of claim 1, wherein the second hydrocarbon used in step c) is selected from the group consisting of aliphatic hydrocarbons having from 6 to 12 carbon atoms and aromatic hydrocarbons having from 6 to 12 carbon atoms.

9. A method for preparing polyolefin using a catalyst for polymerization of the polyolefin prepared by the preparation method of any one of claims 1 to 8.

## Patentansprüche

1. Verfahren zur Herstellung eines Katalysators für die Polymerisation eines Polyolefins, umfassend:
a) Auflösen von Magnesiumhalogenid in einem ersten Alkohol und einem ersten Kohlenwasserstoff, um eine Magnesiumhalogenid-Vorläuferlösung herzustellen;
b) Umsetzen einer Halogenverbindung und eines zweiten Alkohols mit Magnesiummetall, um einen Dialkoxymagnesium-Träger herzustellen; und
c) Umsetzen der Magnesiumhalogenid-Vorläuferlösung und des Dialkoxymagnesium-Trägers mit Titantetrachlorid und einem internen Elektronendonor in Gegenwart eines zweiten Kohlenwasserstoffs.

2. Verfahren nach Anspruch 1, wobei das in der Magnesiumhalogenid-Vorläuferlösung enthaltene Magnesiumhalogenid im Schritt c) in einer Menge im Bereich von 0,01 bis 5 Gewichtsteile enthalten ist, bezogen auf 1 Gewichtsteil des Dialkoxymagnesium-Trägers.

3. Verfahren nach Anspruch 1, wobei im Schritt a) der erste Alkohol und der erste Kohlenwasserstoff in Mengen von 1 bis 10 Gewichtsteile und entsprechend von 1 bis 20 Gewichtsteile verwendet werden, bezogen auf 1 Gewichtsteil des Magnesiumhalogenids.

4. Verfahren nach Anspruch 1, wobei der erste, im Schritt a) verwendete Alkohol ausgewählt ist aus der Gruppe bestehend aus aliphatischen Alkoholen vertreten durch R₁OH und aromatischen Alkoholen vertreten durch R₂OH, in welchen R₁ ein aliphatischer Kohlenwasserstoff mit 1 bis 12 Kohlenstoffatomen ist und R₂ ein aromatischer Kohlenwasserstoff mit 6 bis 12 Kohlenstoffatomen ist.

5. Verfahren nach Anspruch 1, wobei der erste, im Schritt a) verwendete Kohlenwasserstoff ein aliphatischer Kohlenwasserstoff mit 6 bis 20 Kohlenstoffatomen ist.

6. Verfahren nach Anspruch 1, wobei im Schritt b) die Halogenverbindung und der zweite Alkohol in Mengen von 0,01 bis 10 Gewichtsteile und entsprechend von 5 bis 50 Gewichtsteile verwendet werden, bezogen auf 1 Gewichtsteil des Magnesiummetalls.

7. Verfahren nach Anspruch 1, wobei der zweite, im Schritt b) verwendete Alkohol ausgewählt ist aus der Gruppe bestehend aus aliphatischen Alkoholen vertreten durch R₃OH und aromatischen Alkoholen vertreten durch R₄OH, in welchen R₃ ein aliphatischer Kohlenwasserstoff mit 1 bis 6 Kohlenstoffatomen ist und R₄ ein aromatischer Kohlenwasserstoff mit 6 Kohlenstoffatomen ist.

8. Verfahren nach Anspruch 1, wobei der zweite, im Schritt c) verwendete Kohlenwasserstoff ausgewählt ist aus der Gruppe bestehend aus aliphatischen Kohlenwasserstoffen mit 6 bis 12 Kohlenstoffatomen und aromatischen Kohlenwasserstoffen mit 6 bis 12 Kohlenstoffatomen.

9. Verfahren zur Herstellung von Polyolefin unter Verwendung eines Katalysators zur Polymerisation des Polyolefins, der nach dem Verfahren gemäß einem der Ansprüche 1 bis 8 hergestellt ist.

## Revendications

1. Procédé de préparation d'un catalyseur de polymérisation d'une polyoléfine, comprenant :
a) la dissolution d'un halogénure de magnésium dans un premier alcool et un premier hydrocarbure pour préparer une solution de précurseur d'halogénure de magnésium ;
b) la réaction d'un composé halogéné et d'un second alcool avec du magnésium métallique pour préparer un support de dialcoxy-magnésium ; et
c) la réaction de la solution de précurseur d'halogénure de magnésium et du support de dialcoxy-magnésium avec du tétrachlorure de titane et un donneur d'électron interne en présence d'un second hydrocarbure.

2. Procédé selon la revendication 1, dans lequel l'halogénure de magnésium contenu dans la solution de précurseur d'halogénure de magnésium dans l'étape c) est compris à raison de 0,01 à 5 équivalents en poids sur la base de 1 équivalent en poids du support de dialcoxy-magnésium.

3. Procédé selon la revendication 1, dans lequel, dans l'étape a), le premier alcool et le premier hydrocarbure sont utilisés en des quantités de 1 à 10 parties en poids et de 1 à 20 équivalents en poids, respectivement, sur la base de 1 équivalent en poids de l'halogénure de magnésium.

4. Procédé selon la revendication 1, dans lequel le premier alcool utilisé dans l'étape a) est choisi dans le groupe constitué par les alcools aliphatiques représentés par R₁OH et les alcools aromatiques représentés par R₂OH, dans lesquels R₁ est un hydrocarbure aliphatique comportant 1 à 12 atomes de carbone et R₂ est un hydrocarbure aromatique comportant 6 à 12 atomes de carbone.

5. Procédé selon la revendication 1, dans lequel le premier hydrocarbure utilisé dans l'étape a) est un hydrocarbure aliphatique comportant 6 à 20 atomes de carbone.

6. Procédé selon la revendication 1, dans lequel, dans l'étape b), le composé halogéné et le second alcool sont respectivement utilisés en des quantités de 0,01 à 10 équivalents en poids et de 5 à 50 équivalents en poids, , sur la base de 1 équivalent en poids du magnésium métallique.

7. Procédé selon la revendication 1, dans lequel le second alcool utilisé dans l'étape b) est choisi dans le groupe constitué par les alcools aliphatiques représentés par R₃OH et les alcools aromatiques représentés par R₄OH, dans lesquels R₃ est un hydrocarbure aliphatique comportant 1 à 6 atomes de carbone et R₄ est un hydrocarbure aromatique comportant 6 atomes de carbone.

8. Procédé selon la revendication 1, dans lequel le second hydrocarbure utilisé dans l'étape c) est choisi dans le groupe constitué par les hydrocarbures aliphatiques comportant 6 à 12 atomes de carbone et les hydrocarbures aromatiques comportant 6 à 12 atomes de carbone.

9. Procédé de préparation d'une polyoléfine au moyen d'un catalyseur de polymérisation de la polyoléfine préparé par le procédé de préparation selon l'une quelconque des revendications 1 à 8.
